# EUROPEAN PATENT APPLICATION

(11) **EP 3 051 443 A1**
(43) Date of publication of application: **03.08.2016**
(21) Application number: 16153947.3
(22) Date of filing: 02.02.2016
(51) Int. Cl.: G06F 17/30, G06Q 50/00

(54) **APPARATUS, SYSTEM AND METHOD FOR SEARCHING CONTENTS**

(30) Priority: 02.02.2015 US 201514611772; 09.04.2015 KR 20150050288
(71) Applicant: Samsung Electronics Co., Ltd., Gyeonggi-do 16677 (KR)
(72) Inventor: SUN, Xiang, San Jose, CA California 95131 (US); WANG, Luyi, Santa Clara, CA California 95054 (US); KING, Peter, San Mateo, CA California 94402 (US)
(74) Representative: Birchenough, Lewis

(57) **Abstract**

An apparatus, system and method for providing search results based on a social distance from a user are provided. The method includes receiving a search query from a user, setting a value representing a social distance from the user, the social distance including one or more levels, gathering results corresponding to the search query for each level of social distance, and providing the gathered results to the user.

## Description

### TECHNICAL FIELD

Certain embodiments of the present invention provide an apparatus, system, and method for searching contents.

### BACKGROUND

With the advent of the Internet and corresponding advances in computer technologies, a user is able to gather information regarding nearly any topic or subject. For example, a user is able to use a personal computer or other electronic device to access the Internet by means of a web browser and search for desired information. This ability to search for and gather desired information has effectively become a necessity for most people as daily Internet searching is a common occurrence.

However, the results provided by a typical search engine in response to a user's search request are often so broad or general that the user must spend a lot of time analyzing the results before finding information that may be relevant or otherwise of use. Alternatively, the user may be forced to perform another search with a different search query that uses additional terms or different terms in order to narrow the results of the search. In either event, it is an inconvenience for the user in that desired or appropriate search results are not readily available from the initial search.

To provide search results that are better tailored for the user, some applications allow the user to narrow the field of search based on certain variables. For example, some applications allow a user to perform a search based on strong-tie associations with other users. That is, some applications allow a user to perform a search based on their list of contacts, or other associations of the user. However, there is currently no method for prioritizing search results based on data permissions or social weight in shared data containers.

The above information is presented as background information only to assist with an understanding of the present disclosure. No determination has been made, and no assertion is made, as to whether any of the above might be applicable as prior art with regard to the present invention.

### SUMMARY

It is an aim of certain embodiments of the present invention to address, solve, mitigate or obviate, at least partly, at least one of the problems and/or disadvantages associated with the related art, for example at least one of the problems and/or disadvantages described herein. Certain embodiments of the present invention aim to provide at least one advantage over the related art, for example at least one of the advantages described herein.

Accordingly, certain embodiments of the present invention provide an apparatus, a system and a method for providing improved search results.

Certain embodiments of the present invention provide an apparatus, system and method for providing search results that are more relevant to a user's search query.

Certain embodiments of the present invention provide an apparatus, system and method for providing fewer but more relevant search results in response to a user's query.

Certain embodiments of the present invention provide an apparatus, system and method for providing search results based on a social distance from a user.

In accordance with an aspect of the present invention, a method for searching for contents is provided. The method includes: receiving a search query from a user; setting a value representing a social distance from the user, the social distance including one or more levels; gathering results corresponding to the search query for each level of social distance; and providing the gathered results to the user.

In accordance with another aspect of the present invention, a system for searching for contents is provided. The system includes: a content source; and a connector configured to receive a search query from a user, to set a value representing a social distance from the user, the social distance including one or more levels, to gather results corresponding to the search query for each level of social distance from the content source, and to provide the gathered results to the user.

In accordance with another aspect of the present invention, a user device for searching for contents is provided. The user device includes: an input device configured to receive a search query from a user and to receive a value representing a social distance from the user, the social distance including one or more levels; a wireless communication device configured to transmit the search query and the value representing the social distance to a network and to receive results corresponding to the search query for each level of social distance; and a display device configured to provide the received results to the user.

In accordance with another aspect of the present invention, there is provided a computer program comprising instructions arranged, when executed, to implement a method, system and/or device in accordance with any aspect, embodiment, example or claim disclosed herein. A further aspect of the present invention provides a machine-readable storage storing such a program.

Other aspects, advantages, and salient features of the invention will become apparent to those skilled in the art from the following detailed description, which, taken in conjunction with the annexed drawings, discloses embodiments of the invention.

### BRIEF DESCRIPTION OF THE DRAWINGS

The above and other aspects, and features and advantages of certain exemplary embodiments and aspect of the present invention will be more apparent from the following description taken in conjunction with the accompanying drawings, in which:
FIG. 1 illustrates a social distance of user content according to an exemplary embodiment of the present disclosure;
FIG. 2 illustrates a system for performing a search algorithm according to an exemplary embodiment of the present disclosure;
FIG. 3 illustrates a method of searching content according to an exemplary embodiment of the present disclosure; and
FIG. 4 is a block diagram illustrating a configuration of an electronic device according to an exemplary embodiment of the present disclosure.

Throughout the drawings, it should be noted that the same or similar reference numbers may be used to depict the same or similar elements, features, and structures.

### DETAILED DESCRIPTION

The following description of exemplary embodiments of the present invention, with reference to the accompanying drawings, is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

Descriptions of well-known functions, operations, processes, elements, components, features, structures, and constructions may be omitted for clarity and conciseness, and to avoid obscuring the subject matter of the present invention.

The terms and words used in the following description and claims are not limited to the bibliographical meanings, but, are merely used to enable a clear and consistent understanding of the invention. Accordingly, it should be apparent to those skilled in the art that the following description of exemplary embodiments of the present invention is provided for illustration purpose only and not for the purpose of limiting the invention, as defined by the appended claims.

It is to be understood that, throughout the description and claims of this specification, the singular forms "a," "an," and "the" include plural referents unless the context clearly dictates otherwise. Thus, for example, reference to "a component surface" includes reference to one or more of such surfaces.

Throughout the description and claims of this specification, the words "comprise", "include" and "contain" and variations thereof, for example "comprising" and "comprises", means "including but not limited to", and is not intended to (and does not) exclude other features, structures, constructions, elements, components, integers, steps, functions, processes, operations, characteristics, properties and/or groups thereof.

Features, structures, constructions, elements, components, integers, steps, functions, processes, operations, characteristics, properties and/or groups thereof described in conjunction with a particular aspect, embodiment, example and/or claim disclosed herein are to be understood to be applicable to any other aspect, embodiment, example and/or claim disclosed herein unless incompatible therewith.

Throughout the description and claims of this specification, language in the general form of "X for Y" (where Y is some action, process, activity, operation, step or function and X is some means for carrying out that action, process, activity, operation, step or function) encompasses means X adapted, configured or arranged specifically, but not exclusively, to do Y.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

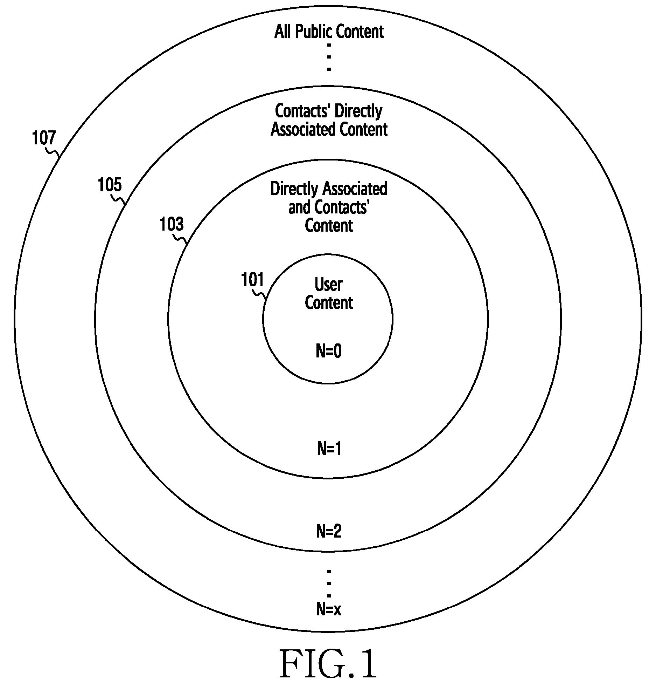

FIGS. 1 through 4, discussed below, and the various exemplary embodiments used to describe the principles of the present disclosure in this patent document are by way of illustration only and should not be construed in any way that would limit the scope of the disclosure. Those skilled in the art will understand that the principles of the present disclosure may be implemented in any suitably arranged portable electronic device. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly stated otherwise. A set is defined as a non-empty set including at least one element.

According to embodiments of the present disclosure, an apparatus, a method and a system for implementing a search algorithm for a content-container data graph are provided. More specifically, an algorithm is provided in which a search is performed based on a social distance.

As described above, a result of a search performed with an algorithm of the related art typically includes a vast amount of content that may be irrelevant to the user's needs. For example, using an algorithm of the related art, a user is able to search 'globally' for contents as when performing a typical internet search using a known search engine. However, the volume of results from such a search is typically so such that the user must spend time deciphering and narrowing the results in order to obtain information of use.

Also known in the related art are search algorithms based on a user's contacts. Here, a user's contact may include another user that is listed in the user's address book, such as by including a phone number, an email address, etc. of the other user, another user with whom the user has an established connection such as a friend on a Social Networking Service (SNS) website, and the like. When using such a search algorithm, as within an SNS website, the user is able to perform a search but within a narrowed field of content. That is, the user is able to narrow the field of searchable content to content that is associated with the user's contacts. For example, when searching on an SNS website, if the user selects to search within the contents associated with his or her contacts, and several contacts in the user's contact list have indicated an affinity for country music, the results of a user's search for popular songs may produce many hits of country songs. That is, as compared to a global search, a search based on a user's contact list will return a narrowed field of results that is assumed to be more tailored to the user given the assumed similarities of the user and his or her contacts.

However, the assumption of similarities between the user and his or her contacts may be unfounded. That is, a user is likely to have many disparate contacts, some or even most of which may not be considered as a contact with common interests. For example, a user's contact list may include members of the user's extended family, the user's professional or business contacts, the user's medical contacts, and the like. Moreover, the list of contacts may be outdated as most users do not typically review and purge their contact lists on a regular basis. Hence, while the results of a search based on the user's contact list may be narrowed as compared to a global search, the results may not be any more relevant than those received from a global search.

Aspects of the present disclosure address the above problems by providing an algorithm that searches for content based on a social distance and thus provides a more meaningful search result.

In certain exemplary embodiments, a parameter may be defined for representing the closeness of association (or connection or linkage) between two users in a social network (for example, referred to as a "distance" or "social distance"). For example, a first user and a second user may be regarded as being separated by a social distance of 1 if the first user and the second user are directly associated (or connected or linked) according to any suitable criterion or criteria.

For example, a first user and a second user may be defined as being directly associated if the second user is a contact (e.g. a "friend") of the first user, and/or vice versa.

In certain exemplary embodiments, a direct association between a first user and a second user may be established according to certain content or information having a common link between the first user and the second user. Such information may be referred to as content or information that establishes an association between the first user and the second user.

For example, alternatively or additionally, a first user and a second user may be defined as being directly associated if the second user has been granted access to a group created by the first user, and/or vice versa. For example, a group may comprise a group (e.g. a "data container") used for sharing content of a certain category, classification or type (e.g. mystery novels), or information related thereto. In this case, the content or information that is associated with the group may be referred to as content or information that establishes an association between the first user and the second user.

In certain exemplary embodiments, access to a group may comprise, for example, one or more of: access ("read access") allowing content in the group to be read or viewed; access ("add access") allowing content to be added to the group; and access ("modification access") allowing content in the group to be modified. A user who is the creator of a group may be referred to as the group "owner". A user who has read access to a group may be referred to as a "follower" of that group (or "group follower"). A user who has add access or modification access to a group may be referred to as a "collaborator" of that group (or "group collaborator").

Alternatively or additionally, a first user and a second user may be defined as being directly associated if the first user and the second user have both identified certain content as being of interest (e.g. if the first user and the second user have both "liked" that content). In this case, the content that is "liked" by both the first user and the second user may be referred to as content that establishes an association between the first user and the second user.

The social distance between two users who are not directly associated (or connected or linked), but who are indirectly associated (or connected or linked) via a chain of N (N=2, 3, 4, ...) direct associations (or connections or links), may be defined as being equal to N (or the minimum value of N where the users are indirectly associated via two or more chains of different lengths). For example, if a second user is directly associated with a first user (i.e. the first user and the second user are separated by a social distance of 1), and a third user is directly associated with the second user (i.e. the second user and the third user are separated by a social distance of 1) without being directly associated with the first user, then the social distance between the first user and the third user is equal to 2. Similarly, if a fourth user is directly associated with the third user without being directly associated with the first user or the second user, then the social distance between the first user and the fourth user is equal to 3.

A user may be regarded as being a social distance of zero from themselves.

In certain exemplary embodiments, if a first user wishes to search for content, the first user inputs a search query (for example, including one or more keywords or search terms) and specifies a maximum social distance, Nₘₐₓ. The maximum social distance, Nₘₐₓ, is used to restrict the content to be searched (e.g. to reduce the content search space). In particular, a set of users who are a social distance of Nₘₐₓ or less from the first user is identified, and the search is conducted based on the search query, wherein only content that is associated with the identified set of users is searched (or in other words, content that is not associated with the identified set of users is not searched).

In certain embodiments, the search may be restricted to content or information that establishes an association (directly or indirectly) between the first user and the other users in the identified set of users. Here, various pieces of information that establish various direct associations forming an indirect association may be regarded as combining to form the information establishing the indirect association.

In relation to the above, the content that is associated with a certain user may be defined according any suitable criterion or criteria. For example, content associated with a certain user may comprise one or more of: content posted by that user; content or information contained in a group (e.g. a data container) created by that user; and content identified as being of interest to that user (e.g. content "liked" by that user). In the latter case, in certain exemplary embodiments, the content identified as being of interest to that user may be searched only if that content has also been identified as being of interest to the first user.

In certain exemplary embodiments, the content that is searched may include content associated with the first user (i.e. the minimum social distance used for the search is zero). Alternatively, the content that is searched may exclude content associated with the first user (i.e. the minimum social distance used for the search is 1). In certain exemplary embodiments, the user may specify not only a maximum social distance Nₘₐₓ, but also a minimum social distance Nₘᵢₙ, and the search may be carried out based on content associated with users having a social distance between N"ₘᵢₙ and Nₘₐₓ from the first user. In certain exemplary embodiments, content identified as being private, or otherwise restricted, may be excluded from the search.

FIG. 1 illustrates a social distance of content according to an embodiment of the present disclosure. For example, the social distance can be variable to determine a search area of a content corresponding to a search query inputted by a user. The social distance indicates whether the user corresponds to at least one of a data container owner, a data container collaborator, and a data container follower.

Referring to FIG. 1, user content 101 includes content that is 'owned' by a user (e.g., a first user). In more detail, the first user may participate in an SNS or other type of application or service in which the first user is able to create a group and/or be a member of another group. For example, while executing the SNS application, the first user may create a group regarding mystery novels. As part of creating that group, the first user may populate the group to include various titles of mystery novels, authors of mystery novels, articles that relate to mystery novels, movies based on mystery novels, local events regarding mystery novels, and the like. Because the first user has created the group, the first user is considered the owner of the data in that group, and the group is denoted as a data container. That the first user is the owner of the mystery novel data container is reflected by the social distance N being equal to zero (i.e., N=0).

As part of the SNS application, other users (e.g., a second user) may join the mystery novel group, such as by invitation, request, or other means. Such second users may be considered as data container collaborators or data container followers. A data container collaborator has permission not only to read data from the first user's data container, but also to write data to the data container. On the other hand, a data container follower only has permission to read data from the first user's data container. Such permissions may be set by the first user (i.e., owner of the data container), by the SNS application, originally set by the SNS application and altered by the first user, or any such combination.

These second users, either collaborators or followers, may be owners of their own data containers. Furthermore, the first user may be a collaborator or follower of other data containers within the SNS application. This set of data containers that is directly associated with the first user, either by means of his or her direct involvement as a collaborator or follower, or through the ownership of the other data container by a collaborator or follower of the first user's data container, is considered to constitute content at a social distance of N = 1 and is reflected as content 103.

As an example of content 103, a collaborator or follower (e.g., second user) of the first user's mystery novel data container may have originated a data container for antique cars. Furthermore, the first user may be a collaborator or follower of a second user's data container for fishing boats. Accordingly, the content 103 would include both the data container for antique cars and the data container for fishing boats. As another example of content 103, both the first user of the SNS application and a second user of the same SNS application may indicate that they like an item (e.g., by giving the item a 'thumb's up') such as a picture of a local sports team. In that regard, the first user and the second user now have a social distance of N = 1 such that the second user's data container's may be included in the content 103.

It should be noted at this point that data containers established in the SNS application may be designated by the owners as public or private. As such, if a second user's data container is designated as a private container, the content of such a private container would not be accessible as part of the content 103. For example, if both the first user and a second user indicated that they like the same item as described above, only the second user's data containers that were designated as public, or, in other words, not designated as private, would be considered as part of the content 103.

Furthermore, in an embodiment of the present disclosure, the content 103 may include non-private content associated with the first user's contacts. That is, as part of the SNS application, the first user may establish contacts, such as friends, etc., that are not necessarily collaborators or followers of any of the first user's data containers and that do not have data containers to which the first user is a collaborator or follower. However, based on their social distance from the first user, the non-private data containers of such contacts would also be included in the content 103.

Content 105 represents data that is one more step removed from the first user insofar as a social distance, that is a social distance of N = 2. For example, and further to the example above, the second user, who is a collaborator or follower of the first user's group for mystery novels, may establish his or her own group regarding antique cars. It may be assumed that still another user (e.g., a third user) is a collaborator or follower of the antique cars group and that the third user may have originated a group or data container regarding the sport of tennis. In that case, because the second user is at a social distance of N = 2 such that the data container for the antique cars would constitute data in the content 103, the third user is at a social distance of N = 3 such that the data container for the sport of tennis would be included in the content 105.

As the social distance increases (i.e., N continues to increment by 1), the amount of corresponding data also increases. Notably, at some point as N increases, the social distance is so great as to represent all non-private (e.g., public) content 107 of the SNS application.

An obvious advantage of performing a search using an algorithm based on social distance is that the result of such a search will provide contents from second users (third users, etc.) with whom the first user (i.e., the user performing the search) already shares a common interest. That is, if the first user and the second user already share an interest in mystery novels at a social distance of N = 1, when the first user performs a search for recommended local restaurants, data containers in the content 103 (the content 105, etc.) that are associated with the second user (i.e., at social distance of N = 1, 2, 3, etc.) may contain data that is much more relevant to the first user, and thus provide a more meaningful search result. Of course, as the social distance greatly increases (i.e., at N = x), the data content effectively mimics all public content such that the search results are not as effective. Accordingly, in an embodiment of the present disclosure, the value of N may be altered depending on the search results, at the discretion of the user performing the search, and the like.

On the other hand, if the first user grows tired of and closes the mystery novel data container and establishes a new data container for, e.g., tropical vacations, a new set of second users may become collaborators and followers of the tropical vacation data container such that a new set of data becomes part of the content 103, content 105, etc. In that case, if the first user again performs a search for recommended local restaurants, the search results would vary from the previous search for local restaurants, but still be more meaningful to the first user than a search of all public data as in the related art.

Certain exemplary embodiments provide a system for searching for contents. For example, the system may comprise a content source, and a connector. The connector may be configured to receive a search query from a user, and set a value representing a social distance from the user, the social distance including one or more levels. The connector may be further configured to gather results corresponding to the search query for each level of social distance from the content source, and provide the gathered results to the user.

In certain exemplary embodiments, the connector may be further configured to reset the value representing the social distance based on the gathered results. The connector may be further configured to gather the results based on at least one of alphabetically, a last access time, an activity level, and a time of creation. The content source may be a social networking service website.

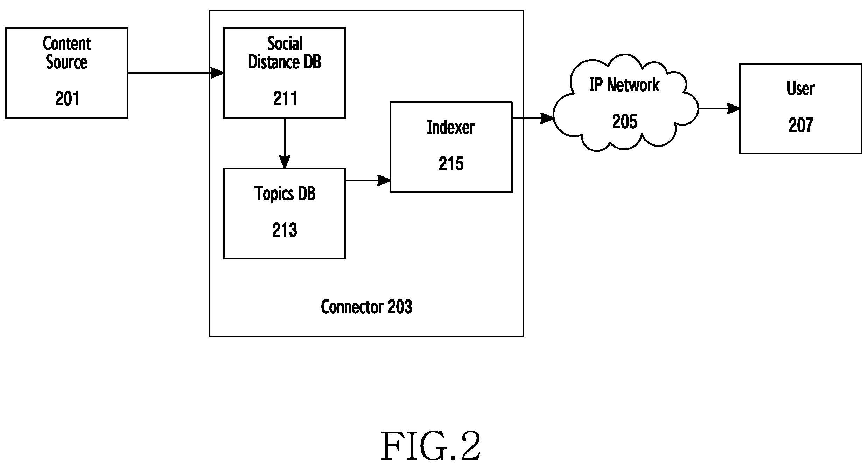

FIG. 2 illustrates an exemplary system for performing a search algorithm according to an embodiment of the present disclosure.

Referring to FIG. 2, the system includes a content source 201, a connector 203, an Internet Protocol (IP) Network 205, and a user 207.

The content source 201 may include data containers created as part of an SNS application. In more detail, users of an SNS application may have access to any variety of content, such as content found on the world wide web, content loaded by a user to the SNS application, and the like. Using the various content, a user of the SNS application may originate a data container so as to group content at the discretion of the user. As described above, a data container may relate to a specific topic, such as mystery novels, antique cars, fishing boats, the sport of tennis, and the like.

The connector 203 is provided as a connection between the content source 201 and the IP network 205. The connector 203 may include necessary components to execute an algorithm for searching based on social distances of a user 207. In this regard, the connector 203 may include a social distance database 211, a topics database 213, and an indexer 215. The connector 203 may of course contain more components which are not illustrated here for the sake of convenience. For example, although not shown, the connector 203 may include a search engine, an analysis engine, and the like. The connector 203 may alternatively be referred to as a "content searcher" or "content acquirer", and may be implemented as a module, processor, controller or engine, for example.

According to an embodiment of the present disclosure, the social distance database 211 includes information regarding the user 207 which indicates a social distance with other users. For example, the social distance database 211 may include information that indicates the user 207 has a social distance of N = 1 to other users with whom the user 207 shares a direct interest. As described above, a direct interest may be indicated when the user 207 and a second user are each associated (e.g., an owner, a collaborator, or a follower) with the same data container. Further, a direct interest may be indicated with the user 207 and a second user both indicate an interest in the same topic, such as by giving a thumbs up to an item, in the content source 201. The social distance database 211 may further indicate that the user 207 has a social distance of N = 2 with third users that are associated with the second users, a social distance of N = 3 with fourth users that are associated with the third users, and so on.

The topics database 213 may store words associated with particular topics identified within a personal vocabulary of the user 207. The indexer 215 may assist in categorizing the topics of the topics database 213.

The IP network 205 may provide an interface between the connector 203 and the user 207. That is, the IP network 205 represents a communication path that includes a series of points or nodes for receiving and transmitting packets of information to and from the connector 203 and the user 207.

The user 207 represents an end user having a connection to the content source 201 through the connector 203 and IP network 205. In an embodiment of the present disclosure, when the content source 201 is implemented as an SNS application, the user 207 may have an account with the SNS application or otherwise access the SNS application to establish various connections and thus social distances with other users of the SNS application. To access the IP network 205, the user 207 may use any of various devices such as a Personal Digital Assistant (PDA), a laptop computer, a mobile phone, a smart phone, a Netbook computer, a television, a Mobile Internet Device (MID), a Ultra Mobile Personal Computer (UMPC), a tablet Personal Computer (PC), a wrist watch, a camera device, a navigation device, a MPEG Layer 3 (MP3) player, and a wearable device.

Certain exemplary embodiments provide a method for searching for contents. For example, the method may comprise receiving a search query from a user and setting a value representing a social distance from the user, the social distance including one or more levels. The method may further comprise gathering results corresponding to the search query for each level of social distance, and providing the gathered results to the user.

In certain exemplary embodiments, the method may further comprise resetting the value representing the social distance based on the gathered results. The social distance may be a variable to determine a search area of a content corresponding to the search query. The social distance may indicate whether the user corresponds to at least one of a data container owner, a data container collaborator, and a data container follower. The results may be gathered based on at least one of alphabetically, a last access time, an activity level, and a time of creation. The results may be gathered from data containers within a social networking service website.

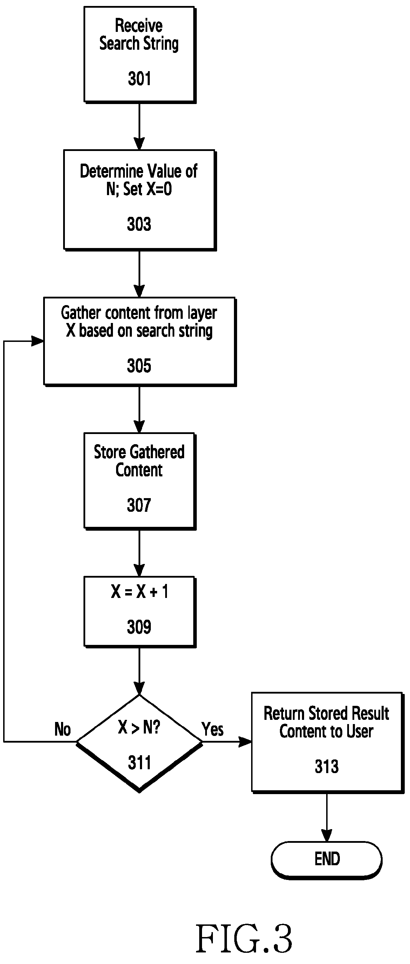

FIG. 3 illustrates an exemplary method of searching content according to an embodiment of the present disclosure.

Referring to FIG. 3, a user inputs a search string in operation 301. In operation 303, a value of N is determined and a counter value X is set to zero. As discussed above, the value of N represents a social distance between the user and other users. In an embodiment, the value of N may be input by the user. In another embodiment, the value of N may be set by the search engine that performs the search for the user. In either scenario, the value of N may be changed depending on the size, relevance, etc. of the returned search result. For example, if a starting value of N is determined to be 6, the search results may be too extreme insofar as too great a size and/or too low a relevance. In that case, the value of N may be lowered such as to 5 or a lower value in order to reduce the size of the search result or to obtain more relevant information. Again, the value of N may be lowered manually or automatically by either the user or the search engine performing the search.

The counter value of X is initialized to zero as a means of iteratively performing the search in layers. That is, in the first iteration of operation 305, content is gathered from layer 0 based on the search string. In other words, and with reference to FIG. 1, the first iteration of gathering content is performed in the data containers at level N = 0. Again, content at this level includes the user's private or public folders, including those owned by the user as well as those collaborated by the user and followed by the user, which are searched based on the search string.

In operation 307, the results gathered in operation 305 are stored for later return to the user. In operation 309, the counter X is incremented by 1 and in operation 311, it is determined if the value of X is greater than the value of N. That is, it is determined if each desired social distance level N has been searched by the search engine. If X is greater than N, this indicates that all desired social distance levels have been searched. In that case, the gathered search results from all N levels are returned to the user in operation 313.

On the other hand, if X is less than or equal to N, this indicates that all desired social distance levels have not been searched and the process returns to operation 305. In that case, the process continues searching at the next higher level of N. In the second iteration of operation 305, the level N = 1 is searched. In that case, data containers, which are not designated as private and which are owned, collaborated or followed by a second user that is associated with the first user as described above, are searched.

In operation 305, the gathering and ultimate listing of content that matches the search string may be performed based on any of several criteria. For example, the matching content may be listed alphabetically, based on last access, based on most activity, based on time created, and the like. Furthermore, when N ≥ 1, the matching content may be listed based on the number of data containers shared between the first user and the second user, the number messages exchanged between the first and second users, the time or date that the second user was added as a contact, and the like.

Certain exemplary embodiments provide an electronic device (e.g. a user device) for searching for contents. For example, the user device may comprise an input device configured to receive a search query from a user and to receive a value representing a social distance from the user, the social distance including one or more levels. The electronic device may further comprise a wireless communication device configured to transmit the search query and the value representing the social distance to a network, and to receive results corresponding to the search query for each level of social distance. The electronic device may further comprise a display device configured to provide the received results to the user.

In certain exemplary embodiments, the value representing the social distance may be re-input by the user based on the received results, and the wireless communication device may be configured to retransmit the value re-inputted. The results may be gathered based on at least one of alphabetically, a last access time, an activity level, and a time of creation. The results may be gathered from data containers within a social networking service website.

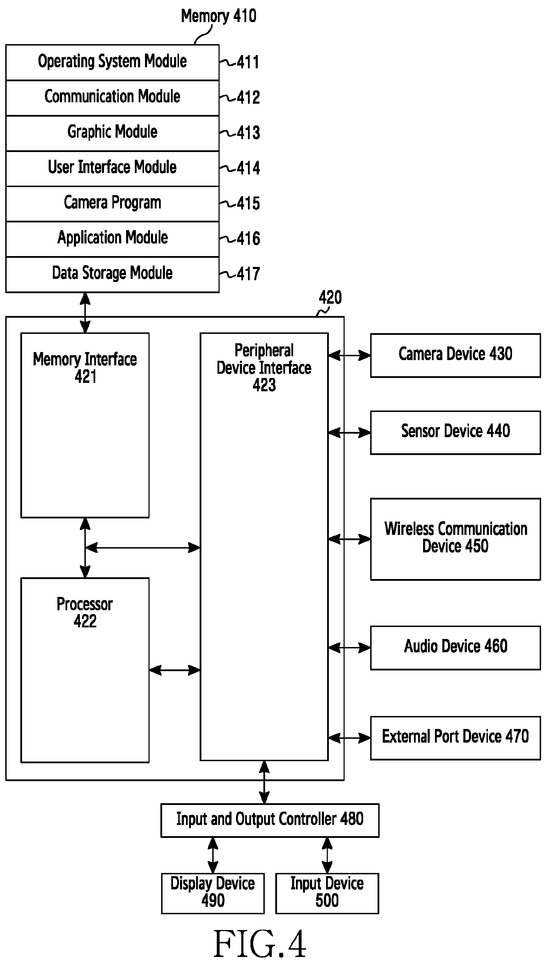

FIG. 4 is a block diagram illustrating an exemplary configuration of an electronic device (e.g. a user device) according to an embodiment of the present disclosure.

Referring to FIG. 4, the electronic device 400 may be a device such as a PDA, a laptop computer, a mobile phone, a smart phone, a Netbook computer, a handheld computer, an MID, a media player, a UMPC, a tablet PC, a notebook PC, a wrist watch, a navigation device, an MP3 player, a camera device, and a wearable device. Further, the electronic device 400 may be a random device including a device in which two or more functions of such devices are coupled. In correlation with the above drawings, the electronic device 400 may be used by the user 207 when implementing aspects of the present disclosure.

According to an embodiment, the electronic device 400 may include a memory 410, a processor unit 420, a camera device 430, a sensor device 440, a wireless communication device 450, an audio device 460, an external port device 470, an input and output controller 480, a display device 490, and an input device 500. The memory 410 and the external port device 470 may be formed in plural.

The processor unit 420 may include a memory interface 421, at least one processor 422, and a peripheral device interface 423. Here, the memory interface 421, the at least one processor 422, and the peripheral device interface 423 included in the processor unit 420 may be integrated into at least one integrated circuit or may be implemented with a separate constituent element.

The memory interface 421 may control access of a constituent element such as the processor 422 or the peripheral device interface 423 to the memory 410.

The peripheral device interface 423 may control a connection of the memory interface 421, the processor 422, and an input and output peripheral device of the electronic device 400.

The processor 422 may control the electronic device 400 to provide various services using at least one software program. By executing at least one program stored at the memory 410, the processor 422 may provide a service corresponding to the program.

By executing several software programs, the processor 422 may perform several functions for the electronic device 400 and perform a processing and control for audio dedicated communication, audiovisual communication, and data communication. Further, by coupling with software modules stored at the memory 410, the processor 422 may perform a method according to various embodiments of the present disclosure. In more detail, the processor 422 may control to perform a search function as described above.

The processor 422 may include at least one data processor, image processor, or coder and decoder (codec). Further, the electronic device 400 may separately form a data processor, an image processor, or a codec.

Various constituent elements of the electronic device 400 may be connected through at least one communication bus (not shown) or an electrical connection means (not shown).

The camera device 430 may perform a camera function of a picture, a video clip, and a recording. The camera device 430 may include a Charged Coupled Device (CCD) or a Complementary Metal-Oxide Semiconductor (CMOS). Further, the camera device 430 may change a hardware configuration, for example, may adjust a lens movement and the number of apertures according to a camera program in which the processor 422 executes. Such camera device 430 may be implemented with a closed loop method that applies a feedback principle.

The sensor device 440 may include a proximity sensor, a hall sensor, an illumination sensor, a motion sensor, etc. For example, the proximity sensor may detect an object approaching the electronic device 400, and the hall sensor may detect a magnetic force of a metal body. Further, the illumination sensor may detect light of a periphery of the electronic device 400, and the motion sensor may include an acceleration sensor or a gyro sensor that detects a motion of the electronic device 400. However, the sensor device 440 is not limited thereto and may further include various sensors that perform known other additional functions.

The wireless communication device 450 enables performance of wireless communication and may include a radio frequency transmitter and receiver or a light (e.g., infrared rays) transmitter and receiver. Although not shown, the wireless communication device 450 may include a Radio Frequency Integrated Circuit unit (RF IC unit) and a base band processor. The RF IC unit may transmit and receive electromagnetic waves, convert a base band signal from the base band processor to electromagnetic waves, and transmit the electromagnetic waves through an antenna. The wireless communication device 450 may be controlled by the peripheral device interface 423 and/or the processor 422 to communicate with a connector, such as the connector 203 in FIG. 2, through an IP network.

The RF IC unit may include an RF transceiver, an amplifier, a tuner, an oscillator, a digital signal processor, a codec chip set, and a Subscriber Identity Module (SIM) card.

The wireless communication device 450 may operate through at least one of a Global System for Mobile Communication (GSM) network, an Enhanced Data GSM Environment (EDGE) network, a Code Division Multiple Access (CDMA) network, a Wideband Code Division Multiple Access (W-CDMA) network, a Long Term Evolution (LTE) network, an Orthogonal Frequency Division Multiple Access (OFDMA) network, a Wireless Fidelity (Wi-Fi) network, a WiMax network, an Near Field Communication (NFC) network, an Infrared ray communication network, and a Bluetooth network according to a communication network. However, the wireless communication device 450 is not limited thereto and may use several communication methods through a protocol for an e-mail, instant messaging, or a Short Message Service (SMS).

The audio device 460 may be connected to a speaker (not shown) and a microphone (not shown) to perform an audio input and output function such as a speech recognition, voice duplication, digital recording, or communication function. The audio device 460 may provide an audio interface between a user and the electronic device 400, convert a data signal received from the processor 422 to an electric signal, and output the converted electric signal through the speaker.

The speaker may convert and output an electric signal to an audible frequency band and be disposed at the front side or the rear side of the electronic device 400. The speaker may include a flexible film speaker in which at least one piezoelectric body is attached to a vibration film.

The microphone may convert a sound wave transferred from a person or other sound sources to an electric signal. The audio device 460 may receive an electric signal from the microphone, convert the received electric signal to an audio data signal, and transfer the converted audio data signal to the processor 422. The audio device 460 may include an earphone, an ear set, a headphone, or a head set that may be detachably provided in the electronic device 400.

The external port device 470 may directly connect the electronic device 400 to another electronic device or may be indirectly connected to another electronic device through a network (e.g., Internet, Intranet, or wireless Local area network (LAN)). The external port device 470 may include a Universal Serial Bus (USB) port or a FIREWIRE port.

The input and output controller 480 may provide an interface between the peripheral device interface 423 and an input and output device such as the display device 490 and the input device 500. The input and output controller 480 may include a display device controller and other input device controllers.

The display device 490 may provide an input and output interface between the electronic device 400 and a user. The display device 490 may transfer user touch information to the processor 422 using touch detection technology and show visual information, text, graphic, or video provided from the processor 422 to the user.

The display device 490 may display state information of the electronic device 400, a moving picture, a still picture, and a character in which the user inputs. Further, the display device 490 may display application related information driven by the processor 422. Such a display device 490 may use at least one of a Liquid Crystal Display (LCD), an Organic Light Emitting Diode (OLED), an Active Mode Organic Light Emitting Diode (AMOLED), a Thin Film Transistor-Liquid Crystal Display (TFT-LCD), a flexible display, and a three-dimensional (3D) display.

The input device 500 may provide input data generated by a user selection to the processor 422 through the input and output controller 480. The input device 500 may include a keypad including at least one hardware button and a touch pad that detects touch information.

The input device 500 may include an up/down button for a volume control and may further include at least one of pointer devices such as a push button, a locker button, a locker switch, a thumb-wheel, a dial, a stick, a mouse, a track-ball, or a stylus in which a corresponding function is given.

The memory 410 may include a non-volatile memory or a high speed Random Access Memory (RAM) such as at least one magnetic disk storage device, at least one light storage device, or a flash memory (e.g., NAND, NOR).

The memory 410 stores software, and such software may include an operating system module 411, a communication module 412, a graphic module 413, a user interface module 414, a camera program 415, an application module 416, and a data storage module 417. A term of a module may be represented with a set of instructions, an instruction set, or a program.

The operating system module 411 may include a built-in operation system such as WINDOWS, LINUX, Darwin, RTXC, UNIX, OS X, Android or VxWorks and include several software components that control a general system operation. A control of such a general system operation may include memory control and management, storage hardware (device) control and management, and power control and management. Further, the operating system module 411 may perform a function of enabling to smoothly perform communication between several hardware (device) and software components (module).

The communication module 412 may perform communication with another electronic device such as a computer, a server, and an electronic device through the wireless communication device 450 or the external port device 470.

The graphic module 413 may include several software components for providing and displaying graphic to the display device 490. The term graphic may indicate a text, a web page, an icon, a digital image, video, and animation.

The user interface module 414 may include several software components related to a user interface. The user interface module 414 may control the display device 490 to display application related information driven by the processor 422. Further, the user interface module 414 may include contents on a change of a user interface state or a condition in which a user interface state is changed.

The camera program 415 may include various software components for performing a camera function.

The application module 416 may include a software component of at least one application installed in the electronic device 400. Such an application may include a browser, an email, a phonebook, a game, an SMS, a Multimedia Message Service (MMS), a Social Network Service (SNS), an instant message, a wake-up call, an MP3 player, a scheduler, a drawing board, a camera, word processing, keyboard emulation, a music player, an address book, a contact list, a widget, Digital Rights Management (DRM), speech recognition, voice duplication, a location determination function, a location based service, and a user authentication service. The term application may be represented with an application program.

The data storage module 417 may provide a location at which data retrieved from a connector, such as the connector 203 of FIG. 3, through an IP network may be stored. In an embodiment, the data storage module 417 may provide a location at which search results based on a social distance are stored. Also, the data storage module 417 may provide a location at which data preferences for searching are stored. For example, the data storage module may store values of N that are set by the user, set during manufacture of the electronic device 400, changed by the user, and the like.

The processor unit 420 may further include an additional module (instructions) in addition to the foregoing module.

Various functions of the electronic device 400 may be executed by hardware or software including at least one processing or Application Specific Integrated Circuit (ASIC).

Although not shown, the electronic device 400 may include a power system that supplies power to several constituent elements included therein. The power system may include a power source (AC power source or battery), a power error detection circuit, a power converter, a power inverter, a charge device, or a power state display device (light emitting diode). Further, the electronic device 100 may include a power management and control device that performs a function of generating, managing, and distributing power.

In an exemplary embodiment, constituent elements of the electronic device 400 are illustrated, but the present disclosure is not limited thereto. For example, the electronic device 400 may have constituent elements of the number more than or fewer than those shown in the drawings.

It will be appreciated that various embodiments of the present disclosure according to the claims and description in the specification can be realized in the form of hardware, software or a combination of hardware and software.

Any such software may be stored in a non-transitory computer readable storage medium. The non-transitory computer readable storage medium stores one or more programs (e.g. software modules), the one or more programs comprising instructions, which when executed by one or more processors in an electronic device, cause the electronic device to implement a method, system, apparatus and/or device of the present disclosure.

Any such software may be stored in the form of volatile or non-volatile storage such as, for example, a storage device like a Read Only Memory (ROM), whether erasable or rewritable or not, or in the form of memory such as, for example, Random Access Memory (RAM), memory chips, device or integrated circuits or on an optically or magnetically readable medium such as, for example, a Compact Disk (CD), Digital Versatile Disc (DVD), magnetic disk or magnetic tape or the like. It will be appreciated that the storage devices and storage media are various embodiments of non-transitory machine-readable storage that are suitable for storing a program or programs comprising instructions that, when executed, implement various embodiments of the present disclosure. Accordingly, various embodiments provide a program comprising code for implementing a device, system, apparatus or method as disclosed herein, and a non-transitory machine-readable storage storing such a program.

While the present disclosure has been shown and described with reference to various exemplary embodiments thereof, it will be understood by those skilled in the art that various changes in form and details may be made therein without departing from the scope of the present invention, as defined by the appended claims.

## Claims

1. A method for searching for contents, the method comprises:
receiving a search query from a user;
setting a value representing a social distance from the user, the social distance including one or more levels;
gathering results corresponding to the search query for each level of social distance; and
providing the gathered results to the user.

2. The method of claim 1, wherein the social distance is a variable to determine a search area of a content corresponding to the search queiy.

3. The method of claim 1 or 2, wherein the social distance indicates whether the user corresponds to at least one of a data container owner, a data container collaborator, and a data container follower.

4. The method of claim 1, 2 or 3, further comprises resetting the value representing the social distance based on the gathered results.

5. The method of any preceding claim, wherein the results are gathered based on at least one of alphabetically, a last access time, an activity level, and a time of creation.

6. The method of any preceding claim, wherein the results are gathered from data containers within a social networking service website.

7. At least one non-transitory computer readable storage medium storing a program that, when executed by an electronic device, cause the electronic device to:
receive a search query from a user;
set a value representing a social distance from the user, the social distance including one or more levels;
gather results corresponding to the search query for each level of social distance; and
provide the gathered results to the user.

8. A system for searching for contents, the system comprising:
a content source; and
a connector configured to:
receive a search query from a user;
set a value representing a social distance from the user, the social distance including one or more levels;
gather results corresponding to the search query for each level of social distance from the content source; and
provide the gathered results to the user.

9. The system of claim 8, wherein the connector is further configured to reset the value representing the social distance based on the gathered results.

10. The system of claim 8 or 9, wherein the connector is further configured to gather the results based on at least one of alphabetically, a last access time, an activity level, and a time of creation.

11. The system of claim 8, 9 or 10, wherein the content source is a social networking service website.

12. A user device for searching for contents, the user device comprises:
an input device configured to receive a search query from a user and to receive a value representing a social distance from the user, the social distance including one or more levels;
a wireless communication device configured to transmit the search query and the value representing the social distance to a network, and to receive results corresponding to the search query for each level of social distance; and
a display device configured to provide the received results to the user.

13. The user device of claim 12, wherein the value representing the social distance is re-input by the user based on the received results, and wherein the wireless communication device is configured to retransmit the value re-inputted.

14. The user device of claim 12 or 13, wherein the results are gathered based on at least one of alphabetically, a last access time, an activity level, and a time of creation.

15. The user device of claim 12, 13 or 14, wherein the results are gathered from data containers within a social networking service website.
